# FASCICULE DE BREVET EUROPEEN

(11) **EP 3 053 499 B1**
(45) Date de publication et mention de la délivrance du brevet: **09.01.2019**
(21) Numéro de dépôt: 15153699.2
(22) Date de dépôt: 03.02.2015
(51) Int. Cl.: A47J 43/044, A47J 43/07, A21C 1/02, A21C 1/14, B01F 7/00, B01F 7/30, B01F 15/00

(54) **BATTEUR-MELANGEUR COMPORTANT UN OUTIL CROCHET**
PLANETENRÜHRMASCHINE UMFASSEND EIN KNETHAKEN-ZUBEHÖR
MIXER-BLENDER COMPRISING A MIXING-HOOK TOOL

(43) Date de publication de la demande: 10.08.2016
(73) Titulaire: Hameur, 2412 Luxembourg (LU)
(72) Inventeur: CALANGE, Yves, 71300 MONTCEAU LES MINES (FR)
(74) Mandataire: Cornuejols, Georges

(56) Documents cités:
- FR-A1- 2 844 442
- SU-A1- 1 318 415
- US-A- 1 734 632
- US-A- 3 854 705
- US-A- 4 337 000

## Description

La présente invention vise un batteur comportant un outil crochet. La présente invention s'applique, notamment, à un batteur destiné à la restauration professionnelle ou grand public, ou à l'industrie alimentaire. Plus particulièrement, la présente invention se rapporte à un batteur à train épicycloïdal.

### ETAT DE LA TECHNIQUE

Il existe des batteurs (également appelés « pétrins ») de principes différents. Un batteur est classiquement équipé d'un bol de mélange dans lequel se déplace un outil de mélange. La forme et le type d'outil varient en fonction du type de batteur. Des types d'outils connus sont notamment les crochets, les feuilles ou palettes et les fouets.

Dans le cadre de la présente invention, l'outil de mélange est, préférentiellement, un outil crochet spiral qui sert à mélanger les ingrédients, c'est-à-dire à lier les ingrédients entre eux, et à malaxer la pâte, par exemple de type pâte à pain, formée pour obtenir une pâte lisse, homogène consistante, souple qui se détache bien des mains.

Dans le cas de batteur équipé d'outil crochet à forme spirale, le mouvement appliqué à l'outil est un mouvement planétaire. Des batteurs à train épicycloïdal sont connus de l'état de la technique, tels que celui décrit dans le document FR 2 844 442.

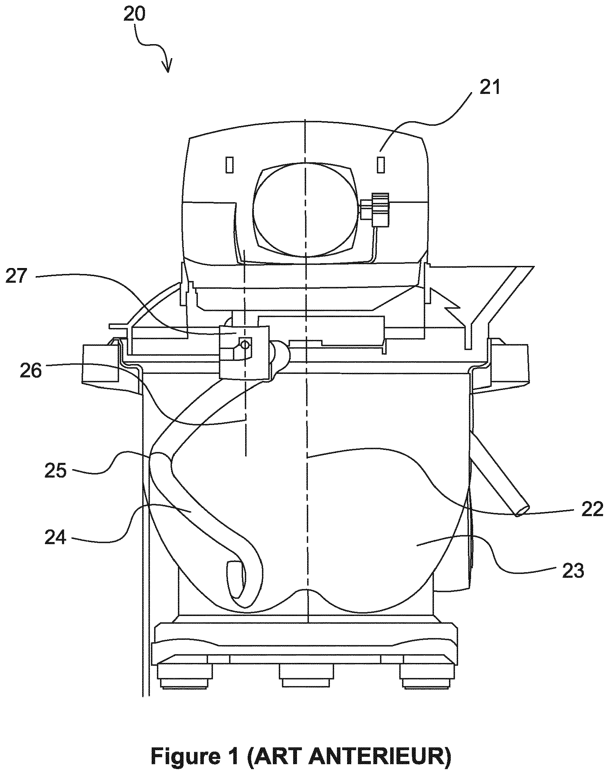

La figure 1 illustre ce type de batteur. Dans ce batteur 20, l'outil de mélange 24 décrit un mouvement satellitaire à l'intérieur du bol, ou cuve, 23. Plus précisément, sous l'action d'un train épicycloïdal entraîné par un moteur 21, l'outil 24 effectue une rotation sur lui-même, autour de l'axe 26, tandis que son axe 26 se déplace suivant un cercle autour de l'axe 22 du train épicycloïdal, lui-même confondu avec l'axe du bol. Le mouvement de l'outil 24 dans le bol 23 de mélange est donc comparable à celui de la Terre autour du Soleil.

Ce type de batteur est souvent utilisé pour de petits volumes travaillés (2 à 10 litres). Le travail effectué sur la pâte est essentiellement en cisaillement et compression. La pâte obtenue a une structure régulière.

Le fond du bol de mélange 23 du batteur à train épicycloïdal 20 possède une forme de tore tronqué. Selon une telle forme, une partie centrale du fond du bol 23 est située plus haut qu'une partie périphérique qui forme une gorge annulaire. Selon un plan de coupe vertical passant par un axe central du bol, tel qu'en figure 1, le fond du bol 23 présente alors une forme sensiblement en « W » ou en « ω ». Une telle forme permet au fond du bol 23 de mieux épouser la forme de l'outil de mélange 24 de type outil crochet. Une bonne correspondance entre les formes de l'outil 24 et du fond du bol 23 constitue un facteur essentiel de l'efficacité du travail d'une préparation. Il est en effet préférable de ne pas laisser de zones « mortes » dans le bol 23, ces zones contenant alors de la matière non travaillée par l'outil.

Pour obtenir un bon travail de la pâte avec un outil crochet spiral 24, il faut que, au cours du mouvement de l'outil 24, la distance 25 entre :
- la surface active de travail de l'outil 24, c'est-à-dire la surface qui se trouve être la plus proche de la surface intérieure de la cuve 23 au cours du mouvement planétaire, d'une part, et
- la surface intérieure de la cuve 23 en regard de cette surface active de travail à un instant donné, d'autre part,
soit la plus faible possible, pour obtenir un bon résultat sur le mélange et le malaxage de la pâte.

Cette faible distance 25 a également pour effets de réduire la remontée de la pâte au-delà de la zone active de travail de l'outil crochet spiral 24 et de réduire la formation d'une « boule » de pâte qui reste accrochée à l'outil 24.

Ainsi, ce type d'outil crochet spiral 24 présente des inconvénients, à savoir :
- un échauffement de la pâte important,
- la nécessité d'une bonne maîtrise de la durée de pétrissage,
- une génération d'efforts très importants sur l'outil 24 et sur la structure du batteur 20 et
- la nécessité d'un moteur 21 puissant pour effectuer le travail.

Pour pallier ces problèmes et avoir des batteurs de construction plus légère, la plupart des batteurs du marché sont construit avec une distance 25 importante entre la surface de l'outil crochet spiral 24 qui se trouve face à la surface intérieure de la cuve 23 à un instant « t » et la surface intérieure de la cuve 23.

Cette distance 25 importante présente l'avantage que l'échauffement et les efforts sont moins importants, mais présente les inconvénients suivants :
- le travail de la pâte est moins efficace,
- la pâte s'enroule autour de l'outil crochet 24 et forme une "boule",
- la pâte remonte le long de l'outil crochet 24 jusqu'au moyeu de fixation 27. Une fois sur le moyeu 27, la pâte noircit au contact des poussières formées entre le moyeu 27 et l'arbre d'entraînement en sortie du train épicycloïdal et
- la durée de travail est plus longue.

On connaît des batteurs, tels que celui décrit dans le document US 4 337 000, qui comportent une rondelle supérieure, en dehors de la zone de travail de l'outil. Cette rondelle est fixée dans l'axe de l'arbre de sortie du planétaire et hors de la zone de travail du crochet. Cette rondelle vise à éviter la remontée de la pâte avec le planétaire.

Ce type de batteur présente de nombreux inconvénients, en plus de ceux décrits ci-dessus. D'une part, la pâte non refoulée vers le fond de la cuve reste collée le long de la zone de travail de l'outil crochet, c'est-à-dire la zone de l'outil crochet qui s'éloigne de l'axe de rotation de l'outil. D'autre part, le laminage de la pâte provoque un échauffement de la pâte.

### OBJET DE L'INVENTION

La présente invention vise à remédier à tout ou partie de ces inconvénients.

A cet effet, selon un premier aspect, la présente invention vise un batteur comportant un outil crochet selon l'objet de la revendication 1.

Cet outil crochet comporte, dans la moitié de la zone active de travail la plus proche de la zone de liaison, une protubérance de refoulement de la pâte qui remonte vers le moyeu lors du mouvement de l'outil crochet, la jonction entre la protubérance et l'outil crochet étant excentrée par rapport à l'axe de rotation du moyeu, ladite protubérance effectuant ainsi un mouvement planétaire avec la zone active de travail.

On rappelle ici qu'une protubérance forme une saillie sur la forme générale de l'objet qui la comporte. Le terme de protubérance est ainsi synonyme des termes de saillie, excroissance et proéminence.

La protubérance est ainsi proche de la surface supérieure de la pâte en cours de pétrissage. La protubérance interdit donc la remontée de la pâte vers le moyeu de l'outil. Sa surface inférieure refoule la pâte vers le fond de la cuve, ce qui améliore le pétrissage.

Les inventeurs ont découvert que cette protubérance, présente au moins les avantages suivants :
- elle autorise une distance plus importante entre la zone active de travail et la cuve du batteur,
- elle diminue les efforts appliqués sur l'outil crochet et sur la structure du batteur,
- elle diminue les échauffements de la pâte,
- elle réduit, voire supprime, la formation d'une boule de pâte,
- elle interdit la remontée de la pâte jusqu'au moyeu de fixation,
- elle réduit la durée de travail,
- elle améliore l'efficacité du travail de la pâte et
- elle autorise l'utilisation d'un moteur de puissance réduite.

Dans des modes de réalisation, la protubérance reste, au cours de son mouvement planétaire, à une distance sensiblement constante de la surface interne de la cuve.

Grâce à ces dispositions, le refoulement de la pâte, qui s'effectue notamment dans la zone se trouvant en dessous de la distance minimale entre la protubérance et la surface interne de la cuve, est plus efficace.

Dans des modes de réalisation, la distance minimale entre la protubérance et la surface interne de la cuve varie, au cours de la rotation de l'outil crochet d'un facteur multiplicatif inférieur ou égal à trois.

Cette distance reste ainsi très faible tout au long de la rotation de l'outil crochet.

Dans des modes de réalisation, le point de la protubérance qui est le plus proche de la surface interne de la cuve parcourt, au cours de la rotation de l'outil crochet, l'ensemble de la périphérie de la protubérance.

Le refoulement de la pâte est ainsi encore amélioré.

Dans des modes de réalisation, la distance minimale, au cours du mouvement planétaire de la protubérance, entre la protubérance et la surface interne de la cuve est toujours inférieure à la distance prédéterminée entre la zone active de travail de l'outil crochet et la surface interne de la cuve.

Dans des modes de réalisation, l'enveloppe de toutes les positions de la protubérance au cours du mouvement de l'outil crochet présente une forme annulaire laissant en son centre une zone libre.

Cette zone libre centrale permet le passage d'ingrédients à l'arrêt ou pendant la rotation de l'outil crochet, notamment lorsqu'une entrée d'ingrédient débouche au centre du batteur, par exemple à travers un couvercle muni d'une ouverture centrale. D'après la présente invention, la protubérance comporte une première partie de forme généralement plane dont le plan général est perpendiculaire à l'axe du moyeu de l'outil crochet.

Cette première partie de la protubérance provoque un premier effet de refoulement de pâte.

Dans des modes de réalisation, la surface de la première partie de la protubérance, du côté de l'extrémité libre de l'outil crochet, est inclinée, par rapport à un plan perpendiculaire à l'axe du moyeu, selon un angle variant entre 10° et 45°.

Cet angle permet à la pâte de mieux glisser sur la première partie de la protubérance au cours du refoulement radial de la pâte.

Dans des modes de réalisation, l'outil crochet objet de l'invention comporte une butée dépassant de la première partie de la protubérance, du côté de l'extrémité libre du crochet, et s'étendant de manière radiale, depuis la zone active de travail, le long de la première partie de la protubérance.

Cette butée provoque un second effet de refoulement de la pâte.

Dans des modes de réalisation, la butée présente un axe général s'étendant, lorsque le point de la surface active de travail juste sous la protubérance se trouve à une distance minimale de la surface intérieure de la cuve, selon un angle compris entre 25° et 45° avec l'axe radial de la cuve sur lequel cette distance minimale est obtenue.

Cet angle assure un refoulement optimal lorsque la protubérance est à proximité de la surface intérieure de la cuve.

Dans des modes de réalisation, la surface de poussée de la butée présente un angle d'inclinaison par rapport à l'axe du moyeu compris entre 0° et 10°.

Dans des modes de réalisation, la face arrière de la butée est inclinée, par rapport à l'axe du moyeu, pour faciliter le glissement radial de la pâte.

Ces angles améliorent l'effet de refoulement obtenu par la butée.

Dans des modes de réalisation, la protubérance est positionnée, dans la zone active de travail, à moins d'un quart de la longueur de la zone active de travail en partant de la zone de liaison.

Le volume de travail dans la cuve, qui se trouve en dessous de la protubérance est ainsi maximisé.

Dans des modes de réalisation, le contour périphérique, selon un plan perpendiculaire à l'axe du moyeu, de la protubérance est configuré pour que la distance qui sépare ce contour de la surface intérieure de la cuve au cours du déplacement de l'outil crochet soit sensiblement constante et inférieure à la distance entre, d'une part, la zone active de l'outil crochet dépassant de la protubérance du côté libre et, d'autre part, la cuve.

### BREVE DESCRIPTION DES FIGURES

D'autres avantages, buts et caractéristiques particulières de la présente invention ressortiront de la description qui va suivre, faite dans un but explicatif et nullement limitatif, en regard de dessins annexés, dans lesquels :
- la figure 1 représente, schématiquement et en coupe verticale, un batteur de l'art antérieur, seul l'outil crochet étant représenté en élévation et non en coupe,
- la figure 2 représente, schématiquement et en coupe verticale, un mode de réalisation particulier du batteur objet de l'invention, seul l'outil crochet étant représenté en élévation et non en coupe,
- la figure 3 représente, schématiquement et en vue de dessus, un mode de réalisation particulier de l'outil crochet objet de l'invention et une cuve de batteur, et des flèches représentatives de mouvements de l'outil crochet
- la figure 4 est similaire à la figure 3, un angle et une zone définissant une butée y étant représentés,
- la figure 5 représente, schématiquement et en élévation, l'outil crochet illustré en figures 3 et 4, et des flèches représentant le mouvement de la pâte le long d'une protubérance de l'outil crochet,
- la figure 6 représente, schématiquement et en élévation, l'outil crochet illustré en figures 3 à 5 et un angle caractéristique d'une butée faisant partie de la protubérance,
- la figure 7 représente, en élévation, l'outil crochet illustré en figures 3 à 6, selon un autre angle de vue,
- la figure 8 représente, en vue de dessus, l'outil crochet illustré en figures 3 à 7 et
- les figures 9 à 11 représentent, en vue de dessus, le mouvement de la protubérance au cours du mouvement planétaire de l'outil crochet.

### DESCRIPTION D'EXEMPLES DE REALISATION DE L'INVENTION

La figure 1 a déjà été détaillée.

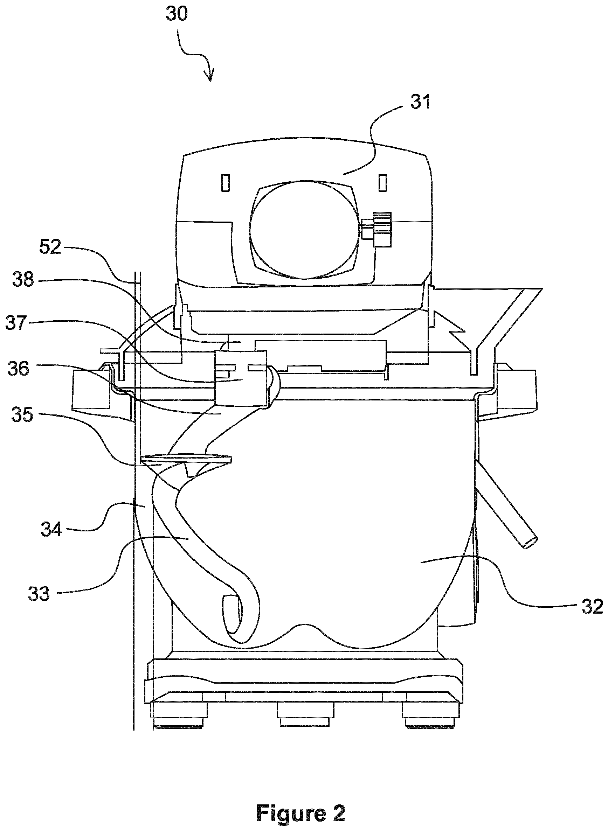

On retrouve, illustrés en figure 2, dans un batteur 30, un moteur 31, une cuve, ou bol, 32, un outil crochet muni d'un moyeu 37 solidaire d'un arbre 38 d'entraînement en sortie d'un train épicycloïdal entraîné par le moteur 31.

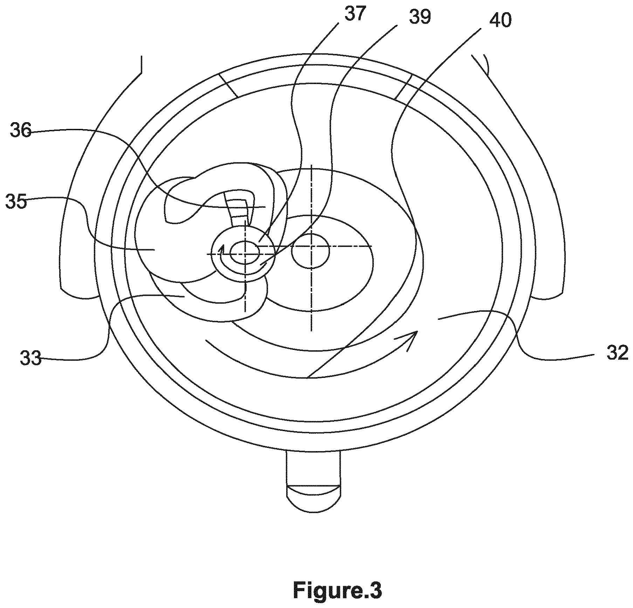

L'outil crochet 50, aussi représenté en figures 3 à 8, comporte :
- une zone active de travail 33, s'étendant de l'extrémité libre de l'outil crochet 50 jusqu'à un point de départ d'une zone de liaison 36 et
- la zone de liaison 36, qui relie la zone active 33 au moyeu 37.

Le point de départ de la zone de liaison 36 est l'endroit où la forme tubulaire de l'outil crochet spiral 50 s'écarte en distance de la surface intérieure de la cuve 32. La zone de liaison 36 partant de la fin de la zone active 33, s'écarte en distance de la surface intérieure de la cuve 32 et se rapproche de l'axe du moyeu 37 de l'outil crochet 50, pour rejoindre le moyeu de fixation 37.

Le mouvement planétaire de l'outil crochet 50, sous l'action du train épicycloïdal entraîné par le moteur 31, est défini suivant les flèches 39 et 40, en figure 3, dont les axes de rotation sont respectivement l'axe de l'arbre d'entraînement 38 et l'axe de la cuve 32. On note que la présente invention ne se limite pas aux outils crochets destinés à suivre un mouvement planétaire mais s'étend aux outils crochets suivant tout mouvement, par exemple en rotation simple.

L'outil crochet spiral 50 est solidaire de l'arbre d'entraînement 38 qui lui applique un mouvement planétaire. L'outil crochet spiral 50 peut être démonté pour être remplacé par d'autres outils, par exemple de type « feuille » pour les mélanges ou de type « fouet » pour les émulsions et mousses.

De manière caractéristique, dans la zone active 33 est intégrée au moins une protubérance 35 de refoulement de la pâte.

Dans les figures, une seule protubérance est représentée et la forme générale de l'outil crochet est tubulaire et la protubérance dépasse latéralement de cette forme générale tubulaire. Cependant la présente invention ne se limite pas à ce nombre mais s'étend à tout nombre d'extensions latérales de l'outil crochet.

L'outil crochet spiral 50 peut aussi bien être réalisé :
- en Aluminium, en acier inoxydable, ou en autres matériaux,
- de manière monobloc ou en plusieurs pièces et/ou
- en bi-matière.

La plage de vitesses de travail et le mouvement planétaire sont identiques à ceux des outils crochets spirals connus dans l'art antérieur.

Les formes et les dimensions de l'outil crochet 50 peuvent varier tout en restant intégrées au volume intérieur de la cuve et en correspondance avec la forme intérieure de la cuve.

Comme indiqué ci-dessus, le point de départ de la zone de liaison est l'endroit où la forme de l'outil crochet spiral 50 s'écarte en distance de la surface intérieure de la cuve 32. Ce point de départ forme un coude, comme on l'observe en figures 3, 4 et 8. La protubérance 35 est formée dans la zone active 33 de l'outil crochet 50.

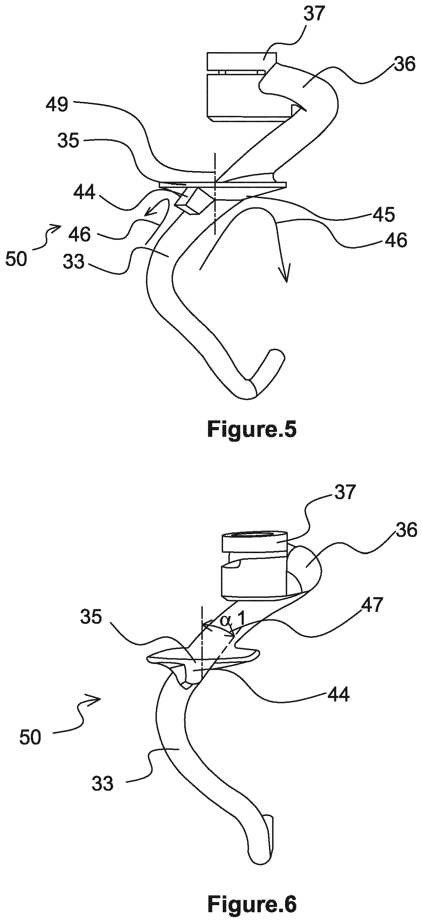

La protubérance 35 de refoulement de la pâte est positionnée dans la partie haute de la zone active 33 et juste avant la zone de liaison. Par exemple, la protubérance 35 est positionnée, dans la zone active 33, à moins d'un quart de la longueur de la zone active, en partant de la zone de liaison 36. Selon un autre exemple, la protubérance 35 est positionnée dans le dernier quart de la hauteur de la zone active 33, en partant de la partie la plus basse de la zone active 33 sur les figures 2, 5, 6 et 7. La protubérance 35 a pour effet de refouler la pâte, suivant le mouvement représenté par les flèches 46 (figure 5), lorsque la pâte s'enroule et monte le long de la spirale de l'outil crochet 50.

En effet, la pâte, de par le mouvement de l'outil crochet spiral 50, tend à s'enrouler sur l'outil crochet spiral 50 et, de ce fait, à monter vers le moyeu 37. Dans ce mouvement ascendant, la pâte rencontre la protubérance 35 et s'écarte, dans un premier temps, suivant un axe approximativement horizontal avant de retomber vers le fond de la cuve 32. La protubérance 35 comporte une première partie de forme généralement plane, dont le plan général est perpendiculaire à l'axe du moyeu 37 de l'outil crochet 50. Cette première partie, qui entoure complètement la partie tubulaire de l'outil crochet 50, ressemble de manière préférentielle à une collerette non plissée, une couronne ou un anneau plein. Dans le mode de réalisation représenté dans les figures, cette première partie de la protubérance 35 a :
- une section horizontale globalement ovoïde, sans axe de symétrie et décentrée par rapport à la partie tubulaire de l'outil crochet 50 vers l'axe du moyeu 37 (voir figures 3, 4 et 8),
- une surface relativement plane du côté du moyeu 37 (voir figures 5 à 7) et
- une surface inférieure globalement conique du côté de la partie libre de l'outil crochet 50 (voir figures 5 à 7).

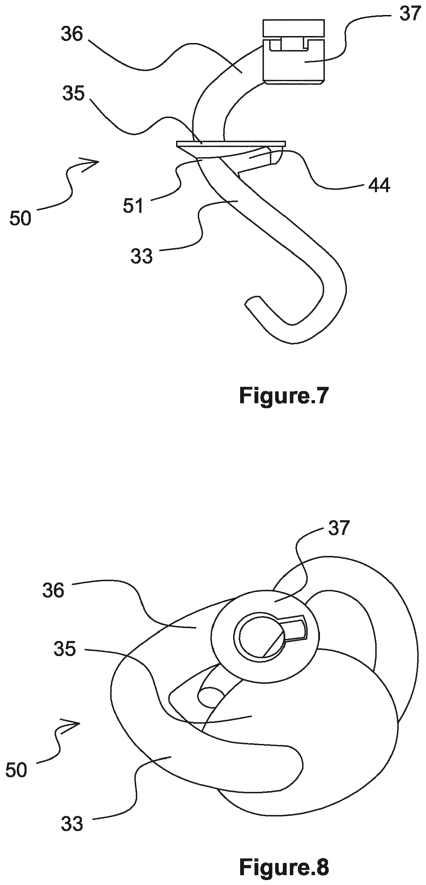

Pour accentuer l'effet de refoulement de la pâte vers le fond de la cuve 32, la protubérance 35 comporte, sur sa face inférieure 45 (figure 5), une butée (ou talon) 44 (figures 6 et 7). La butée 44 dépasse de la première partie de la protubérance, du côté de l'extrémité libre de l'outil crochet 50, et s'étend de manière radiale, depuis la zone active 33, le long de cette première partie.

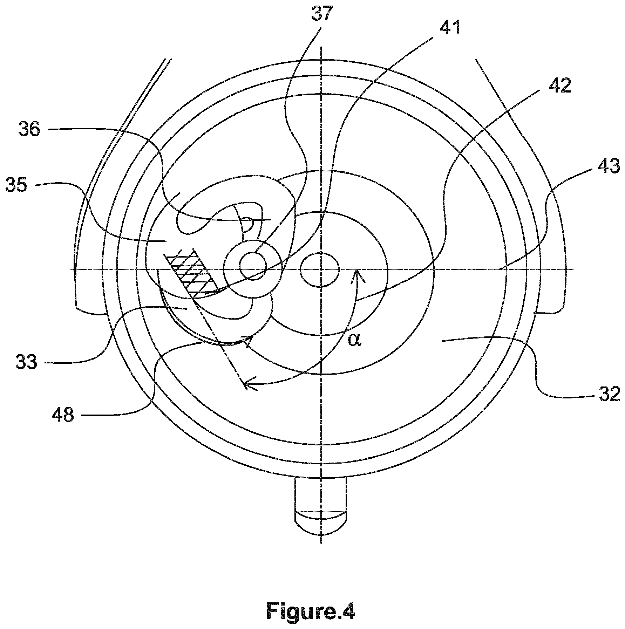

De par le mouvement planétaire imposé à l'outil crochet 50, à chaque approche de la butée 44 au regard de la surface intérieure de la cuve 32, la pâte, bloquée entre la surface de la cuve 32, la protubérance 35, la forme spirale de l'outil crochet 50 en dessous de la protubérance 35 et la butée 44, est repoussée dans un sens opposé au sens de rotation de l'outil crochet 50 sur lui-même illustré par la flèche 39 (figure 3). Plus exactement, la pâte se trouve repoussée approximativement vers le centre de la cuve 32 suivant la flèche 48 (figure 4). Ce mouvement est conjugué avec le mouvement de refoulement vers le fond de la cuve 32 dû à la première partie, généralement plane, de la protubérance 35.

La butée 44 a également pour effet d'interdire le glissement de la pâte autour de l'outil crochet 50, par rapport à l'axe 49 (figure 5), axe parallèle à l'axe de l'arbre d'entraînement 38 et passant par le centre de la partie tubulaire de l'outil crochet supportant la protubérance 35, accentuant ainsi le refoulement de la pâte vers le fond de la cuve 32 suivant les flèches 46.

Le refoulement de la pâte par la protubérance 35 suivant les flèches 46, conjugué au mouvement suivant la flèche 48 sous l'effet de la butée 44 garantissent un pétrissage amélioré de la pâte. La pâte, toujours repoussée vers le centre du fond de la cuve 32, est reprise par l'extrémité inférieure de l'outil crochet 50 pour être malaxée.

Lorsque le point 51 (figure 7), situé sur la surface active 33 de l'outil et juste sous la protubérance 35, se trouve en regard de la surface intérieure de la cuve 32, à un instant « t », à une distance minimale de la surface intérieure de la cuve 32, la coupe horizontale 41 (figure 4) de la butée 44 est définie de telle façon qu'elle forme un angle 42, préférentiellement compris entre 25° et 45° avec l'axe 43 radial de la cuve 32 sur lequel cette distance minimale est obtenue.

La forme de la surface inférieure 45 (figure 5) de la première partie, généralement plane, de la protubérance 35, du côté de l'extrémité libre de l'outil crochet 50, est définie de telle manière que la pâte glisse sur cette surface sans s'accumuler dans les zones de raccordement entre la protubérance 35, la butée 44 et la partie tubulaire spirale de la zone active 33 de l'outil crochet 50.

Cette surface inférieure de la première partie, généralement plane, de la protubérance 35 est inclinée, par rapport à un plan horizontal perpendiculaire à l'axe du moyeu, d'une façon non constante. Par exemple, la plage de variation de l'angle s'étend entre 10° et 45°.

Comme illustré en figure 6, la surface de poussée de la butée 44, c'est-à-dire la surface qui fait front à la matière travaillée lors du mouvement de l'outil crochet (à gauche en figure 6), est sensiblement verticale : l'angle d'inclinaison par rapport à un plan vertical, et par rapport à l'axe du moyeu 37, est par exemple entre 0° et 10°.

La face arrière (ou opposée) de la butée 44 est inclinée d'un angle 47, par rapport à un plan vertical ou l'axe du moyeu 37, pour faciliter le glissement radial de la pâte qui remonte vers la face inférieure de la protubérance 35. Plus l'angle d'inclinaison 47 est important, plus il favorise le glissement de la pâte.

Un rayon est également prévu dans les zones de raccordement pour éviter l'accumulation de pâte, faciliter le nettoyage, améliorer la résistance mécanique du raccordement et limiter les risques d'apparition de fissures.

Comme illustré en figures 3, 4 et 8, le contour périphérique, selon un plan perpendiculaire à l'axe du moyeu, de la protubérance 35 est configuré pour que la distance 52 (figure 2) qui sépare ce contour de la surface intérieure de la cuve 32 au cours du déplacement de l'outil crochet 50 soit sensiblement constante.

Comme illustré en figure 2, cette distance 52 est inférieure à la distance 34 entre la surface de travail de la zone active 33, surface qui se trouve être la plus proche de la surface intérieure de la cuve 32 au cours du mouvement planétaire, c'est-à-dire la distance entre, d'une part, la zone active de l'outil crochet dépassant de la protubérance du côté libre et, d'autre part, la surface intérieure de la cuve 32.

Cette distance 52 est aussi petite que possible sans risquer que, sous l'effet des efforts appliqués à l'outil crochet 50, ce contour touche la surface intérieure de la cuve 32. Comme illustré en figure 2, la distance 34 est préférentiellement supérieure à la distance correspondante 25 (figure 1) dans les batteurs 20 du marché.

Les inventeurs ont constaté que, même équipé uniquement d'une protubérance 35 sensiblement plane, l'outil crochet 50 fonctionne correctement. L'apport de la butée de poussée 44 garantit, néanmoins, à la fois, une meilleure résistance mécanique de la protubérance et un meilleur résultat dans toutes les conditions de travail de la pâte (volume, humidité...).

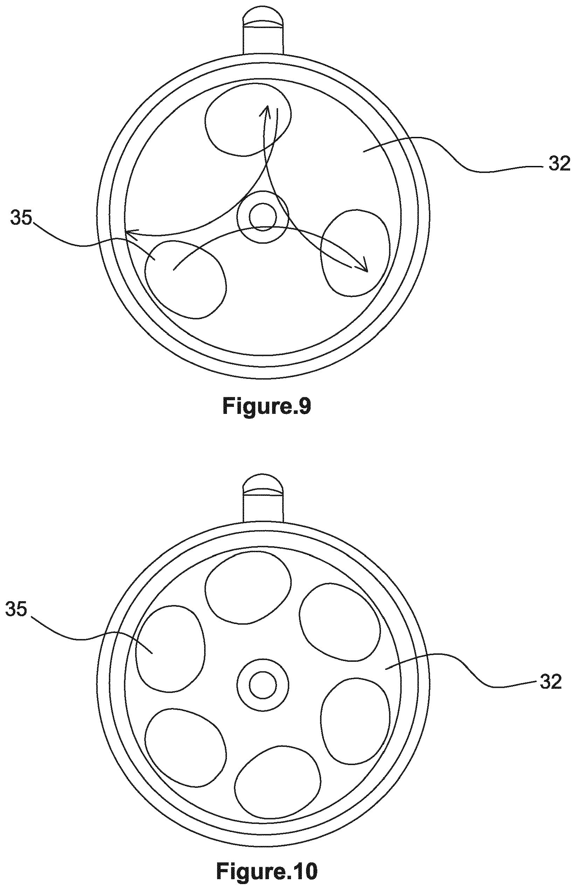

On observe, en figures 9 à 11, le mouvement de la protubérance 35 au cours du mouvement de l'outil crochet 50.

En figure 9, une rotation de la sortie du planétaire d'environ un tour a été représentée. Comme on le voit, chaque point de la protubérance 35 suit un mouvement épicycloïdal, c'est-à-dire suit une courbe d'un point d'un premier cercle, qui roule à l'intérieur d'un second cercle, le diamètre du premier cercle étant inférieur à la moitié de celui du second cercle.

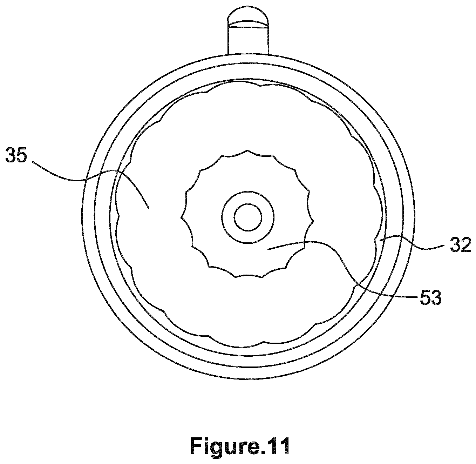

En figure 10, une rotation de la sortie du planétaire d'environ deux tours a été représentée. En figure 11 une rotation de la sortie du planétaire d'environ dix tours a été représentée.

On observe que la protubérance 35 reste, au cours de son mouvement planétaire, à une distance sensiblement constante de la surface interne de la cuve 32. Le refoulement de la pâte, qui s'effectue notamment dans la zone se trouvant en dessous de la distance minimale entre la protubérance 35 et la surface interne de la cuve 32, est ainsi plus efficace.

On observe aussi que la distance minimale entre la protubérance et la surface interne de la cuve varie, au cours de la rotation de l'outil crochet d'un facteur multiplicatif inférieur ou égal à trois. Cette distance reste ainsi très faible tout au long de la rotation de l'outil crochet.

On observe encore que le point de la protubérance 35 qui est le plus proche de la surface interne de la cuve 32 parcourt, au cours de la rotation de l'outil crochet, l'ensemble de la périphérie de la protubérance 35. Le refoulement de la pâte est ainsi encore amélioré.

Comme indiqué ci-dessus, la distance minimale 52, au cours du mouvement planétaire de la protubérance, entre la protubérance 35 et la surface interne de la cuve 32 est inférieure à la distance prédéterminée 34 entre la zone active de travail de l'outil crochet et la surface interne de la cuve.

Préférentiellement, à tout instant, la distance minimale entre la protubérance 35 et la surface interne de la cuve 32 est inférieure à la distance prédéterminée 34.

On voit encore, notamment en figure 11, que l'enveloppe de toutes les positions de la protubérance 35 au cours du mouvement de l'outil crochet présente une forme annulaire laissant en son centre une zone libre 53. Cette enveloppe présente la forme générale d'un tore aplati. Cette zone libre centrale 53 permet le passage d'ingrédients à l'arrêt ou pendant la rotation de l'outil crochet, notamment lorsqu'une entrée d'ingrédient débouche au centre du batteur, par exemple à travers un couvercle muni d'une ouverture centrale.

Comme on le comprend à la lecture de la description ci-dessus, faite en regard des figures, la mise en oeuvre de l'outil crochet 50 objet de l'invention présente au moins les avantages suivants :
- elle autorise une distance 34 importante,
- elle diminue les efforts appliqués sur l'outil crochet 50 et sur la structure du batteur 30,
- elle diminue les échauffements de la pâte,
- elle réduit, voire supprime, la formation d'une boule de pâte,
- elle interdit la remontée de la pâte jusqu'au moyeu 37 de fixation,
- elle réduit la durée de travail,
- elle améliore l'efficacité du travail de la pâte et
- elle autorise l'utilisation d'un moteur de puissance réduite.

## Revendications

1. Batteur (30) comportant un moteur de mise en mouvement d'un arbre d'entraînement, une cuve (32), et un outil crochet (50) qui comporte :
- un moyeu (37) de fixation de l'outil crochet à l'arbre d'entraînement,
- une zone active de travail (33), de forme générale en spirale, s'étendant jusqu'à l'extrémité libre de l'outil crochet et configurée pour que chaque élément de la zone active passe, au cours du mouvement de l'outil crochet, à une distance prédéterminée (34) de la surface interne de la cuve et
- une zone de liaison (36) entre le moyeu de fixation et la zone active de travail ;
et l'outil crochet comporte également, dans la moitié de la zone active de travail la plus proche de la zone de liaison, une protubérance (35) de refoulement de la pâte qui remonte vers le moyeu lors du mouvement de l'outil crochet, la jonction entre la protubérance et l'outil crochet étant excentrée par rapport à l'axe de rotation du moyeu, ladite protubérance effectuant ainsi un mouvement planétaire avec la zone active de travail, et la protubérance comporte une première partie de forme généralement plane dont le plan général est perpendiculaire à l'axe du moyeu de l'outil crochet.

2. Batteur (30) selon la revendication 1, dans lequel la protubérance (35) reste, au cours de son mouvement planétaire, à une distance (52) sensiblement constante de la surface interne de la cuve (32).

3. Batteur (30) selon la revendication 2, dans lequel la distance minimale entre la protubérance (35) et la surface interne de la cuve (32) varie, au cours de la rotation de l'outil crochet d'un facteur multiplicatif inférieur ou égal à trois.

4. Batteur (30) selon l'une des revendications 1 à 3, dans lequel le point de la protubérance (35) qui est le plus proche de la surface interne de la cuve (32) parcourt, au cours de la rotation de l'outil crochet, l'ensemble de la périphérie de la protubérance.

5. Batteur (30) selon l'une des revendications 1 à 4, dans lequel la distance minimale (52), au cours du mouvement planétaire de la protubérance, entre la protubérance (35) et la surface interne de la cuve (32) est inférieure à la distance prédéterminée (34) entre la zone active de travail de l'outil crochet et la surface interne de la cuve.

6. Batteur (30) selon l'une des revendications 1 à 5, dans lequel l'enveloppe de toutes les positions de la protubérance (35) au cours du mouvement de l'outil crochet présente une forme annulaire laissant en son centre une zone libre.

7. Batteur (30) selon l'une des revendications 1 à 6, dans lequel la surface de la première partie de la protubérance (35), du côté de l'extrémité libre de l'outil crochet, est inclinée, par rapport à un plan perpendiculaire à l'axe du moyeu (37), selon un angle variant entre 10° et 45°.

8. Batteur (30) selon l'une des revendications 1 à 7, qui comporte une butée (44) dépassant de la première partie de la protubérance (35), du côté de l'extrémité libre de l'outil crochet, et s'étendant de manière radiale, depuis la zone active de travail (33), le long de la première partie de la protubérance.

9. Batteur (30) selon la revendication 8, dans lequel la butée (44) présente un axe général s'étendant, lorsque le point (51) de la zone active de travail (33) juste sous la protubérance (35) se trouve à une distance minimale de la surface intérieure de la cuve (32), selon un angle (42) compris entre 25° et 45° avec l'axe (43) radial de la cuve sur lequel cette distance minimale est obtenue.

10. Batteur (30) selon l'une des revendications 8 ou 9, dans lequel la surface de poussée de la butée (44) présente un angle d'inclinaison par rapport à l'axe du moyeu (37) compris entre 0° et 10°.

11. Batteur (30) selon l'une des revendications 1 à 10, dans lequel la protubérance (35) est positionnée, dans la zone active de travail (33), à moins d'un quart de la longueur de la zone active de travail en partant de la zone de liaison (36).

12. Batteur (30) selon l'une des revendications 1 à 11, dans lequel la protubérance (35) est positionnée dans le dernier quart de la hauteur de la zone active de travail (33), en partant de la partie la plus basse de la zone active de travail.

13. Batteur (30) selon la revendication 12, dans lequel le contour périphérique, selon un plan perpendiculaire à l'axe du moyeu (37), de la protubérance (35) est configuré pour que la distance (52) qui sépare ce contour de la surface intérieure de la cuve (32) au cours du déplacement de l'outil crochet (50) soit sensiblement constante et inférieure à la distance (34) entre, d'une part, la zone active de l'outil crochet dépassant de la protubérance du côté libre et, d'autre part, la cuve.

## Patentansprüche

1. Schlagmaschine (30), umfassend einen Motor, um eine Antriebswelle, ein Becken (32) und ein Hakenwerkzeug (50) in Bewegung zu setzen, die umfasst:
- eine Befestigungsnabe (37) des Hakenwerkzeugs an der Antriebswelle,
- einen aktiven Arbeitsbereich (33) in allgemeiner Spiralform, der sich bis zum freien Ende des Hakenwerkzeugs erstreckt und konfiguriert ist, damit jedes Element des aktiven Bereichs im Verlauf der Bewegung des Hakenwerkzeugs in einer vorbestimmten Entfernung (34) von der internen Oberfläche des Beckens hindurchtritt und
- einen Verbindungsbereich (36) zwischen dem Befestigungsmittel und dem aktiven Arbeitsbereich;
und das Hakenwerkzeug umfasst ebenfalls in der Mitte des dem Verbindungsbereich am nächsten liegenden aktiven Arbeitsbereichs eine Protuberanz (35) zum Zurückdrängen des Teigs, der bei der Bewegung des Hakenwerkzeugs zur Nabe aufsteigt, wobei die Verbindung zwischen der Protuberanz und dem Hakenwerkzeug im Verhältnis zur Rotationsachse der Nabe exzentrisch ist, wobei die genannte Protuberanz somit eine planetarische Bewegung mit dem aktiven Arbeitsbereich ausführt und die Protuberanz einen ersten Teil in allgemein ebener Form umfasst, deren allgemeine Ebene zur Achse der Nabe des Hakenwerkzeugs lotrecht ist.

2. Schlagmaschine (30) gemäß Anspruch 1, bei der die Protuberanz (35) im Verlauf ihrer planetaren Bewegung in einer zur internen Oberfläche des Beckens (32) deutlich konstanten Entfernung (52) bleibt.

3. Schlagmaschine (30) gemäß Anspruch 2, bei der die Mindestentfernung zwischen der Protuberanz (35) und der internen Oberfläche des Beckens (32) im Verlauf der Rotation des Hakenwerkzeugs um einen Multiplikationsfaktor von weniger als oder gleich drei variiert.

4. Schlagmaschine (30) gemäß einem der Ansprüche 1 bis 3, bei der der Punkt der Protuberanz (35), der der internen Oberfläche des Beckens (32) am nächsten ist, im Verlauf der Rotation des Hakenwerkzeugs die gesamte Peripherie der Protuberanz durchläuft.

5. Schlagmaschine (30) gemäß einem der Ansprüche 1 bis 4, bei der die Mindestentfernung (52) im Verlauf der planetarischen Bewegung der Protuberanz zwischen der Protuberanz (35) und der internen Oberfläche des Beckens (32) geringer ist als die vorbestimmte Entfernung (34) zwischen dem aktiven Arbeitsteil des Hakenwerkzeugs und der internen Oberfläche des Beckens.

6. Schlagmaschine (30) gemäß einem der Ansprüche 1 bis 5, bei der die Hülle aller Positionen der Protuberanz (35) im Verlauf der Bewegung des Hakenwerkzeugs eine ringförmige Form aufweist, die in ihrem Zentrum einen freien Bereich frei lässt.

7. Schlagmaschine (30) gemäß einem der Ansprüche 1 bis 6, bei der die Oberfläche des ersten Teils der Protuberanz (35) der Seite des freien Endes des Hakenwerkzeugs im Verhältnis zu einer lotrechten Ebene zur Achse der Nabe (37) gemäß einem zwischen 10° und 45° variierenden Winkel geneigt ist.

8. Schlagmaschine (30) gemäß einem der Ansprüche 1 bis 7, die einen Anschlag (44) umfasst, der den ersten Teil der Protuberanz (35) auf der Seite des freien Endes des Hakenwerkzeugs übersteigt und sich radial von dem aktiven Arbeitsbereich (33) entlang dem ersten Teil der Protuberanz erstreckt.

9. Schlagmaschine (30) gemäß Anspruch 8, bei der der Anschlag (44) eine allgemeine Achse aufweist, die sich gemäß einem zwischen 25° und 45° inbegriffenen Winkel mit der radialen Achse (43) des Beckens, auf der diese Mindestentfernung erhalten wird, erstreckt, wenn der Punkt (51) des aktiven Arbeitsteils (33) direkt unter der Protuberanz in einer Mindestentfernung von der internen Oberfläche des Beckens (32) angeordnet ist.

10. Schlagmaschine (30) gemäß einem der Ansprüche 8 oder 9, bei der die Schuboberfläche des Anschlags (44) einen zwischen 0° und 10° inbegriffenen Neigungswinkel im Verhältnis zur Achse der Nabe (37) aufweist.

11. Schlagmaschine (30) gemäß einem der Ansprüche 1 bis 10, bei dem die Protuberanz (35) weniger als ein Viertel der Länge des aktiven Arbeitsbereichs von dem Verbindungsbereich (36) ausgehend in dem aktiven Arbeitsbereich (33) positioniert ist.

12. Schlagmaschine (30) gemäß einem der Ansprüche 1 bis 11, bei der die Protuberanz (35) im letzten Viertel der Höhe des aktiven Arbeitsbereichs (33) ausgehend von dem untersten Teil des aktiven Arbeitsbereichs positioniert ist.

13. Schlagmaschine (30) gemäß Anspruch 12, bei der die umlaufende Kontur gemäß einer zur Achse der Nabe (37) lotrechten Ebene der Protuberanz (35) konfiguriert ist, damit die Entfernung (52), die diese Kontur von der internen Oberfläche des Beckens (32) im Verlauf der Verschiebung des Hakenwerkzeugs (50) trennt, deutlich konstant und geringer ist als die Entfernung (34) zwischen einerseits dem aus der Protuberanz der freien Seite hervorstehenden aktiven Bereich des Hakenwerkzeugs und andererseits dem Becken.

## Claims

1. Mixer (30) comprising a motor for moving a drive shaft, a bowl (32), and a hook tool (50) that comprises:
- a hub (37) for attaching the hook tool to the drive shaft,
- an active working area (33), broadly spiral in shape, extending to the free end of the hook tool and configured such that, during the movement of the hook tool, each element of the active area passes at a predefined distance (34) from the inner surface of the bowl, and
- a connecting area (36) between the attachment hub and the active working area;
and the hook tool also comprises, in the half of the active working area closest to the connecting area, a protuberance (35) for pushing back the dough that rises towards the hub as the hook tool moves, the junction between the protuberance and the hook tool being off-centered relative to the hub's axis of rotation, said protuberance thus performing a planetary movement with the active working area, and the protuberance comprises a broadly flat first portion whose general plane is perpendicular to the axis of the hub of the hook tool.

2. Mixer (30) according to claim 1, wherein the protuberance (35) remains, during its planetary movement, at a substantially constant distance (52) from the inner surface of the bowl (32).

3. Mixer (30) according to claim 2, wherein the minimum distance between the protuberance (35) and the inner surface of the bowl (32) varies, during the rotation of the hook tool, by a multiplicative factor less than or equal to three.

4. Mixer (30) according to one of claims 1 to 3, wherein the point of the protuberance (35) that is closest to the inner surface of the bowl (32) travels round the entire periphery of the protuberance during the rotation of the hook tool.

5. Mixer (30) according to one of claims 1 to 4, wherein the minimum distance (52), during the planetary movement of the protuberance, between the protuberance (35) and the inner surface of the bowl (32) is less than the predefined distance (34) between the active working area of the hook tool and the inner surface of the bowl.

6. Mixer (30) according to one of claims 1 to 5, wherein the envelope of all the positions of the protuberance (35) during the movement of the hook tool has an annular shape leaving a free area at its center.

7. Mixer (30) according to one of claims 1 to 6, wherein the surface of the first portion of the protuberance (35), on the free end side of the hook tool, is inclined, at an angle varying between 10° and 45° relative to a plane perpendicular to the axis of the hub (37).

8. Mixer (30) according to one of claims 1 to 7, which comprises a stop (44) projecting from the first portion of the protuberance (35), on the free end side of the hook tool, and extending radially, from the active working area (33), along the first portion of the protuberance.

9. Mixer (30) according to claim 8, wherein the stop (44) has a general axis extending, when the point (51) of the active working area (33) just under the protuberance (35) is at a minimum distance from the inner surface of the bowl (32), at an angle (42) of between 25° and 45° with the radial axis (43) of the bowl on which this minimum distance is obtained.

10. Mixer (30) according to one of claims 8 or 9, wherein the thrust surface of the stop (44) has an angle of inclination of between 0° and 10° relative to the axis of the hub (37).

11. Mixer (30) according to one of claims 1 to 10, wherein the protuberance (35) is positioned, in the active working area (33), at less than one-quarter of the length of the active working area starting from the connecting area (36).

12. Mixer (30) according to one of claims 1 to 11, wherein the protuberance (35) is positioned in the last quarter of the height of the active working area (33), starting from the lowest portion of the active working area.

13. Mixer (30) according to claim 12, wherein the peripheral contour of the protuberance (35), along a plane perpendicular to the axis of the hub (37), is configured such that the distance (52) that separates this contour from the inner surface of the bowl (32) during the movement of the hook tool (50) is substantially constant and less than the distance (34) between, firstly, the active working area of the hook tool extending from the protuberance on the free side and, secondly, the bowl.
